(19) **Europäisches Patentamt**

**European Patent Office**

**Office européen des brevets**

(11) **EP 1 089 149 A2**

(12) **EUROPÄISCHE PATENTANMELDUNG**

(43) Veröffentlichungstag:
04.04.2001 Patentblatt 2001/14

(51) Int. Cl.[7]: **G05B 19/05**

(21) Anmeldenummer: **00119721.9**

(22) Anmeldetag: **09.09.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.09.1999 DE 19946787**

(71) Anmelder:
**Focke & Co. (GmbH & Co.)**
**27283 Verden (DE)**

(72) Erfinder:
• **Focke, Heinz**
 **27283 Verden (DE)**
• **Häfker, Thomas**
 **27299 Langwedel (DE)**
• **Olbrich, Hartmut**
 **27283 Verden (DE)**

(74) Vertreter:
**Wasiljeff, Johannes M.B., Dipl.-Ing. et al**
**Meissner, Bolte & Partner,**
**Anwaltssozietät GbR,**
**Hollerallee 73**
**28209 Bremen (DE)**

(54) **Verfahren und Vorrichtung zur Diagnose von Maschinen**

(57)    Die Erfindung betrifft ein Verfahren und eine Vorrichtung zur Diagnose von Maschinen (10) zur Herstellung von Produkten, wie Zigaretten (12) bzw. Zigarettenpackungen (11), wobei die Produkte auf Fehler untersucht werden und ein ein fehlerhaftes Produkt anzeigendes Signal erzeugt wird. Der Erfindung liegt das Problem zugrunde, die Diagnose zu verbessern.

Zur Lösung dieses Problems ist das erfindungsgemäße Verfahren dadurch gekennzeichnet, daß das fehleranzeigende Signal (46) auf eventuelle Periodizität von fehlerhaften Produkten (11, 12) ausgewertet und eine eventuelle Periodizität ermittelt wird. Hierzu weist die erfindungsgemäße Vorrichtung eine entsprechend ausgebildete Steuereinrichtung (27a) auf.

Fig.2

**Beschreibung**

Die Erfindung betrifft ein Verfahren und eine Vorrichtung zur Diagnose von Maschinen zur Herstellung von Produkten, wie Zigaretten und/oder Zigarettenpackungen, insbesondere von Zigarettenverpackungsmaschinen. Bei einem derartigen Verfahren werden die Produkte auf Fehler untersucht und ein ein fehlerhaftes Produkt anzeigendes Signal erzeugt. Entsprechend weist eine derartige Vorrichtung Fehlererkennungsmittel auf zum Untersuchen, ob ein Produkt fehlerhaft ist, und zum Erzeugen eines ein fehlerhaftes Produkt anzeigenden Signals.

Maschinen der o.g. Art weisen regelmäßig einen sehr komplexen Aufbau auf. Eine Vielzahl von verschiedenen Baugruppen und Werkzeugen wirkt zusammen, um Zigaretten und/oder fertige Zigarettenpackungen oder andere Produkte herzustellen, einschließlich zu verpacken. Bei jeder einzelnen Baugruppe bzw. Werkzeug kann es zu Störungen kommen, die das herzustellende Produkt beeinträchtigen. Um eine gleichbleibende Produktqualität sicherzustellen, werden die Produkte am Ende oder während des Verarbeitungsprozesses im Hinblick auf eventuelle Fehler untersucht. Wird ein Fehler erkannt, wird dies durch eine entsprechendes Signal angezeigt und das Produkt aus dem Verarbeitungsprozeß entfernt.

Zur Lokalisierung der fehlerhafte Produkte verursachenden fehlerhaften Baugruppen oder Werkzeugen bedient man sich herkömmlicherweise einer Reihe von Sensoren an verschiedenen Baugruppen bzw. Werkzeugen. Es ist jedoch praktisch nicht möglich, jede Baugruppe bzw. jedes Werkzeug zu überwachen. Daher gestaltet sich die Diagnose von Maschinen nach Auftreten eines Fehlers häufig sehr schwierig und es müssen eine Vielzahl von Baugruppen und Werkzeugen demontiert und untersucht werden. Dies führt zu hohen Kosten und ist daher nachteilig.

Der Erfindung liegt daher das Problem zugrunde, die Diagnose von Maschinen zu verbessern.

Zur Lösung dieses Problems ist das erfindungsgemäße Verfahren dadurch gekennzeichnet, daß das fehleranzeigende Signal auf eventuelle Periodizität, insbesondere auf eine oder mehrere Perioden, von fehlerhaften Produkten ausgewertet und eine eventuelle Periodizität ermittelt wird. Eine erfindungsgemäße Vorrichtung ist gekennzeichnet durch eine Steuerungseinrichtung, die derart ausgebildet ist, daß eine Periodizität des fehleranzeigenden Signals ermittelbar und angebbar ist.

Im Zusammenhang mit der Erfindung bzw. bevorzugten Ausführungsformen der Erfindung werden nachfolgende Begriffe wie folgt verwendet. Unter dem Begriff "Produkte" sind alle Ent-, Zwischen- und Vorprodukte während eines Herstellungsprozesses, einschließlich Verpackungsprozesses zu verstehen, insbesondere fertige und unfertige Zigarettenpackungen oder Zigaretten im Bereich der Zigarettenherstellung und/oder -verpackung. Unter dem Begriff "Periodizität" ist jedwede periodische Beschaffenheit des fehleranzeigenden Signals zu verstehen. Das fehleranzeigende Signal kann insbesondere eine oder mehrere Perioden aufweisen. Unter dem Begriff "Takt" ist jede regelmäßige Bewegung zu verstehen, insbesondere Bewegung mit zeitweiligem Stillstand, aber auch kontinuierliche Bewegungen. Unter dem Begriff "Baugruppe" wird jede Einheit von Werkzeugen verstanden, insbesondere sogenannte Revolver, wie Falt-, Übergabe- oder Trockenrevolver, Taschenketten oder auch Magazine und Schachtgruppen. Unter dem Begriff "Werkzeuge" sind einzelne Elemente einer Baugruppe, beispielsweise einzelne Taschen einer Taschenkette oder eines Revolvers sowie Schächte von Schachtgruppen zu verstehen.

Der Erfindung liegt die Erkenntnis zugrunde, daß bei Maschinen der o.g. Art viele Baugruppen zyklisch arbeiten und dazu eine bestimmte Anzahl von Werkzeugen aufweisen. Falls ein einzelnes Werkzeug einer Baugruppe fehlerhaft arbeitet, sind einzelne der hergestellten Produkte, zumindest mit einer erhöhten Wahrscheinlichkeit, fehlerhaft und zwar mit einer Periode, die der Anzahl von Werkzeugen dieser Baugruppe entspricht. Da die einzelnen Baugruppen einer Maschine in der Regel eine charakteristische Anzahl von Werkzeugen aufweisen, treten die fehlerhaften Produkte mit einer dieser Anzahl entsprechenden Periode auf. Deshalb läßt sich eine fehlerhafte bzw. das fehlerhafte Werkzeug aufweisende Baugruppe anhand ihrer charakteristischen Periode erkennen.

Fehlerhafte Produkte können jedoch auch mit mehreren verschiedenen Perioden auftreten. Dies ist der Fall, wenn ein Maschinenfehler mehrerer Baugruppen mit unterschiedlichen Perioden beeinträchtigt, was insbesondere auf einen Fehler in einem Übergangsbereich von zwei Baugruppen zusammenhängen kann.

Weist beispielsweise eine Baugruppe 24 Werkzeuge auf, von denen eines fehlerhaft ist, und wobei die Baugruppe bei jedem Maschinentakt um ein Werkzeug voranschreitet, ergibt sich eine Fehlerperiode von 24 Maschinentakten in den untersuchten Produkten. Bei anderen Baugruppen können jedoch je Maschinentakt mehrere Werkzeuge vorangerückt werden. Ebenso ist es möglich, daß ein Werkzeug erst nach mehreren Maschinentakten eine Position vorangerückt wird. In jedem Fall ergibt sich jedoch bei derart zyklisch arbeitenden Baugruppen eine oder mehrere charakteristische Perioden, so daß sich bei Auftreten einer entsprechenden Periodizität im fehleranzeigenden Signal auf eine oder mehrere fehlerhafte Baugruppen schließen läßt. Ferner läßt sich auch auf das jeweilige Werkzeug schließen, wenn der Abstand, insbesondere in Maschinentakten, zwischen den Fehlererkennungsmitteln und einer Referenzposition, beispielsweise des obersten Werkzeugs, bekannt ist.

Falls beim Auftreten von fehlerhaften Produkten keine spezifische Periodizität ermittelt werden kann bzw. der Fehler bei jedem Produkt bzw. Maschinentakt mit gleicher Wahrscheinlichkeit auftritt, geht die Erfindung davon aus, daß alle Werkzeuge gleichmäßig von einem Fehler betroffen sind.

Weitere Einzelheiten der Erfindung ergeben sich aus Unteransprüchen und anhand eines in der Zeichnung dargestellten Ausführungsbeispiels. In der Zeichnung zeigen:

Fig. 1   Einzelheiten einer Verpackungsmaschine für Zigaretten in vereinfachter Seitenansicht;

Fig. 2   einen Ausschnitt der Verpackungsmaschine aus Fig. 1 im Bereich des Trockenrevolvers sowie einem Blockdiagramm zur Veranschaulichung einer Verarbeitung eines fehleranzeigenden Signals;

Fig. 3   einen ersten Teil eines Flußdiagramms zur Veranschaulichung einer Ausgestaltung des erfindungsgemäßen Verfahrens;

Fig. 4   einen zweiten Teil des Flußdiagramms zu Fig. 3.

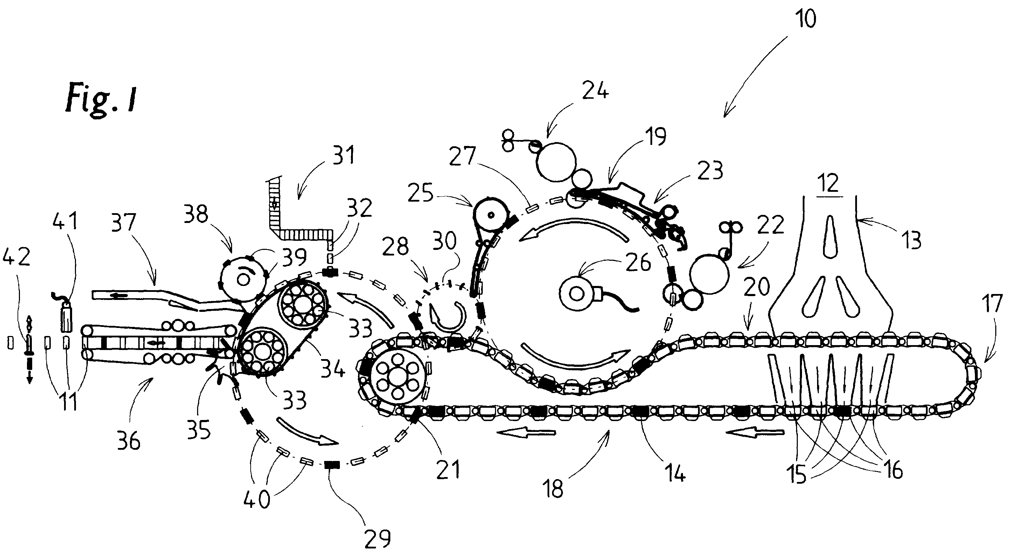

Fig. 1 zeigt eine Maschine 10 zum Herstellen von Zigarettenpackungen 11 des Typs Weichbecherpackung. Zigaretten 12 werden der Maschine im Bereich eines Zigarettenmagazins 13 übergeben. Es dient zur Speicherung von Zigaretten 12 und zur Abgabe von Zigarettengruppen 14 entsprechend dem Inhalt einer Zigarettenpackung 11. Das Zigarettenmagazin 13 weist zu diesem Zweck im unteren Bereich Magazinschächte auf, die zu Schachtgruppen 15 zusammengefaßt sind. Aus jeder Schachtgruppe 15 wird eine Zigarettengruppe 14 in Taschen 16 einer Taschenkette 17 eingeschoben und zwar im Bereich eines unteren Fördertrums 18. Die Taschenkette 17 transportiert die Zigarettengruppen 14 zu einem Faltrevolver 19, dem sie durch Ausschub aus den Taschen 16 der Taschenkette 17 im Bereich eines oberer Fördertrums 20 übergeben werden.

Das Zigarettenmagazin 13 weist vier Schachtgruppen 15 auf. Daher gelangt jede vierte, sich in der Taschenkette 17 befindende Zigarettengruppe 14 aus der selben Schachtgruppe 15 in die Taschenkette 17. Sollte bspw. eine Schachtgruppe 15 nicht ordnungsgemäß arbeiten, weil z.B. eine querliegende Zigarette 12 einen oder mehrere Schächte der Schachtgruppe 15 blockiert, würde jede vierte Zigarettengruppe in der Taschenkette 17 fehlerhaft formiert sein. Ein derartiger Fehler würde sich daher in dem Produktionsprozeß mit einer Periode von vier Produkten bzw. Zigarettenpackungen 11 wiederholen.

Die Taschenkette 17 weist bspw. 72 Werkzeuge, nämlich Taschen 16, auf von denen jedoch in Fig. 1 nur eine geringere Anzahl dargestellt ist. Ist bspw. eine der Taschen 16 der Taschenkette 17 fehlerhaft, bspw. verschlissen, entstehen fehlerhafte Produkte mit einer Periode von 72. Zumindest ist jedoch die Wahrscheinlichkeit erhöht, daß ein Produkt - eine Zigarettenpackung 11 - mit dieser Periode fehlerhaft ausgebildet ist.

Die Taschenkette 17 arbeitet mit zwei verschiedenen Takten. Zum einen wird die Taschenkette 17 im Bereich des oberen Fördertrums 20 mit einem dem Maschinentakt entsprechenden Takt, insbesondere kontinuierlich, vorangeschoben. Dabei wird mit jedem Maschinentakt die Taschenkette 17 um eine Tasche 16 verschoben. Im Bereich des unteren Fördertrums 18 wird die Taschenkette 17 hingegen mit einem langsameren Takt, insbesondere mit zeitweiligem Stillstand, vorwärtsbewegt. Dieser Takt ist um den Faktor 4, der der Anzahl von Schachtgruppen 15 entspricht, reduziert. Je Takt dieses langsameren Taktes werden vier Zigarettengruppen 14 gleichzeitig in vier Taschen 16 des unteren Fördertrums 18 eingestoßen. Man erreicht dies dadurch, daß zwei die Taschenkette führende Umlenkrollen 21 (von denen nur die linke dargestellt ist) horizontal verschoben werden und zwar mit einem Grundtakt, der diesem langsameren Takt entspricht.

Dieses besondere Taktverhalten der Taschenkette 17 kann - je nach Art eines fehlerhaften Werkzeugs bzw. Maschinenelements - zu einer bestimmten Periodizität von fehlerhaften Packungen 11 führen, so daß ein Fehler in dieser Mechanik auch zu mehreren verschiedenen Perioden im fehlerhafte Packungen anzeigenden Signal führen kann. Dies gilt insbesondere, wenn die Anzahl der Taschen 16 kein Vielfaches der Schachtgruppen 15 ist. Je mehr Perioden im fehleranzeigenden Signal enthalten sind, desto umfassender ist die Information über eine fehlerhafte Baugruppe bzw. ein fehlerhaftes Werkzeug.

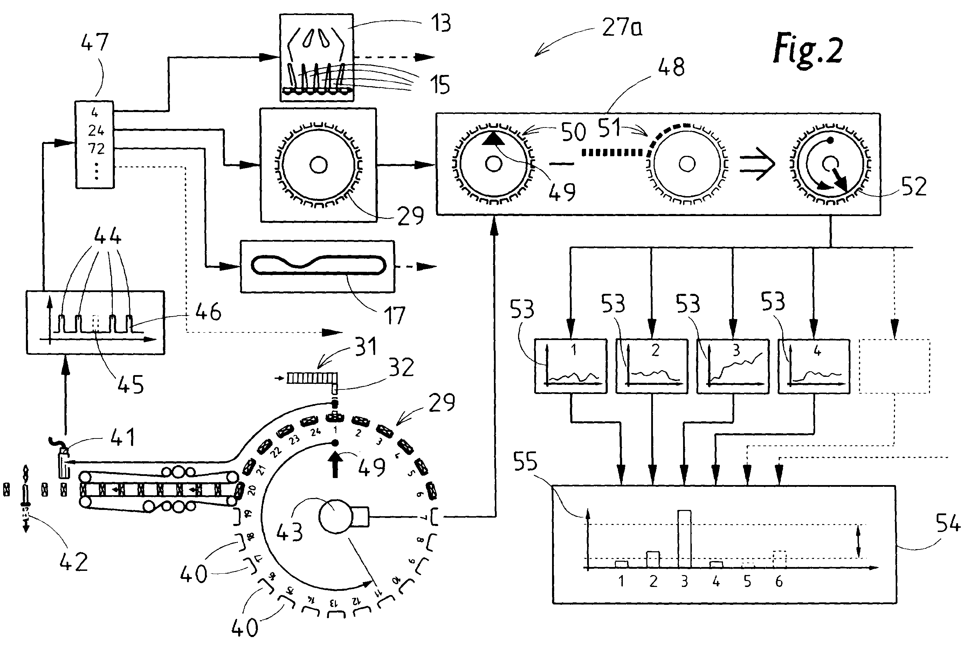

Der Faltrevolver 19 ist längs seines Umfangs mit einer Vielzahl von Organen zur Aufnahme von Zuschnitten aus Papier oder Stanniol für die Innenumhüllung und Außenumhüllung einer Packung 11 bzw. für einen Becher versehen. Beispielhaft sind Organe zum Zuführen von inneren Zuschnitten 22, ein Faltaggregat 23, ein Zuführorgan für den Außenzuschnitt 24, aus dem der Packungsbecher gebildet wird, sowie weitere Faltaggregate 25 zum Schließen der Packungsbecher dargestellt. Ein im Zentrum des Faltrevolvers 19 angeordneter Drehgeber 26 dient zur Positionsbestimmung des Faltrevolvers 19 bzw. eines einzelnen, mehrerer oder aller Aufnahmeorgane 27 zur Aufnahme einer Zigarettengruppe 14 während des Faltvorgangs. Der Drehgeber ist mit einer in Fig. 2 dargestellten Steuereinheit 27a verbunden. Der Faltrevolver 19 weist bspw. 24 Werkzeuge, nämlich Aufnahmeorgane 27, auf. Damit ist die Anzahl der Werkzeuge, nämlich Taschen 16, der Taschenkette 17 ein ganzzahliges Vielfaches der Anzahl der Werkzeuge, nämlich Aufnahmeorgane 27, des Faltrevolvers 19.

Nachdem die Zigarettengruppen 14 den Faltrevolver 19 durchlaufen haben, werden sie mittels eines Übergaberevolvers 28 an einem Trockenrevolver 29 übergeben. Der Übergaberevolver 28 weist acht Werkzeuge, nämlich Aufnahmeorgane 30, zur Aufnahme von weitgehend fertiggestellten Zigarettenpackungen 11 auf. Wiederum ist die Anzahl der Werkzeuge des Übergaberevolvers 28 derart gewählt, daß ein ganzzahliges Vielfaches hiervon der Anzahl der Werkzeuge des Faltrevolvers 19 entspricht.

Im Trockenrevolver 29 werden die Zigarettenpackungen in mehreren - in der Zeichenebene hintereinanderliegenden - Ebenen getrocknet und mittels eines Banderolenapparates 31 mit Banderolen 32 versehen. Mittels eines über zwei Umlenkrollen 33 geführten Bandförderers 34 gelangen die fertigen Packungen 11 über ein Sternrad 35 zu einem Abförderer 36. Mittels eines Ausschleusenaggregats 37 können Fehlpackungen ausgeschleust werden. Diese Ausschleusenaggregat weist ein Ausschleusenrad 38 mit sechs Werkzeugen, nämlich Greiforganen 39 auf. Der Trockenrevolver 29 weist hingegen 24 Werkzeuge, nämlich Aufnahmeorgane 40 auf. Die Anzahl der Werkzeuge des Trockenrevolvers ist somit wiederum ein ganzzahliges Vielfaches der Werkzeuge des Übergaberevolvers 28 sowie des Ausschleusenrads 38. Die fertigen Packungen werden im Endbereich des Abförderers 36 mit Fehlererkennungsmitteln im Hinblick auf eventuelle Fehler untersucht. Hierzu dient eine Überwachungskamera 41, die mit der Steuereinheit 27a verbunden ist.

Anstelle oder zusätzliche zur Überwachungskamera 41 kann aber auch jede anderen Art von optischen, mechanischen, elektrischen und/oder Magnetresonanz-Sensoren verwendet werden. Je nach Art des herzustellenden Produkts kommen auch akustische Sensoren, wie Ultraschallsensoren, in Betracht. Stellt die Überwachungskamera 41 oder ggf. ein anderer Sensor ein fehlerhaftes Produkt - eine Packung 11 - fest, wird dieses Produkt mittels eines Ausstoßers 42 ausgestoßen und somit aus dem Herstellungsprozeß entfernt. Es ist aber auch möglich, daß die Überwachungskamera 41 eine Bewertung einer fehlerhaften Packung zuläßt, so daß bei nur geringen Fehlern die Packung im Herstellungsprozeß verbleibt und lediglich ein Fehler angebendes Signal erzeugt wird.

Anhand der dargestellten Verpackungsmaschine für Zigaretten ist die Kompliziertheit moderner Maschinen zum Herstellen von Produkten, insbesondere von Verpackungen, deutlich zu erkennen. Dabei weist jede Baugruppe (Magazin 13, Taschenkette 17, Faltrevolver 19, Übergaberevolver 28, Trockenrevolver 29, Ausschleusenaggregat 37) eine Vielzahl von Werkzeugen auf, die aufgrund mechanischer Belastungen verschleißen können. Etwaige Fehler lassen sich zunächst nur der Art nach mittels der Überwachungskamera 41 erkennen. Die Erfindung erlaubt jedoch auch die Baugruppe sowie das entsprechende Werkzeug zu lokalisieren. Hierbei spielt insbesondere die jeweilige Anzahl von Werkzeugen innerhalb einer Baugruppe eine Rolle. Bei den beschriebenen Baugruppen ist jeweils die Anzahl der Werkzeuge einer Baugruppe ein ganzzahliges Vielfaches der Werkzeuge einer anderen Baugruppe. Hierdurch sind auch mögliche Fehlerperioden jeweils ganzzahlige Vielfache von einer kleinen bzw. der kleinsten Periode. Die Erfindung ist jedoch auch für Maschinen verwendbar, bei denen die Anzahl der Werkzeuge der einzelnen Baugruppen keine ganzzahligen, sondern nicht-ganzzahlige Vielfachen untereinander aufweisen. Bei einer derartigen Wahl der Anzahl der Werkzeuge kann das fehleranzeigende Signal eine aus mehreren Perioden bestehende Periodizität aufweisen. Fig. 2 zeigt einen Ausschnitt der Maschine aus Fig. 1 im Bereich des Trockenrevolvers 29. Auch der Trockenrevolver 29 weist einen Drehgeber 43 auf, so wie im übrigen alle Baugruppen der Maschinen einen Positionsgeber aufweisen. Der Drehgeber 43 ist ebenso wie die anderen Positionsgeber mit der Steuereinheit 27a verbunden.

Die Überwachungskamera 41 erzeugt je fehlerfreiem Produkt, nämlich Packung 11, ein Rechtecksignal 44 bzw. ein Signal auf hohem Niveau. Falls eine Packung 11 fehlt oder fehlerhaft ist, erzeugt die Überwachungskamera 41 kein derartiges Rechtecksignal 44, sondern ein Störsignal auf niedrigem Niveau, das die fehlende oder fehlerhafte Packung 11 anzeigt.

Die Steuereinheit 27a untersucht das aus Rechtecksignalen und Störsignalen gebildete sog. fehleranzeigende Signal 46. Sie stellt hierbei fest, ob eine bestimmte Periodizität innerhalb des fehleranzeigenden Signals, insbesondere der Störsignale, vorliegt, d.h. ob die Stärsignale in einem bestimmten Rhythmus auftreten. Diese Untersuchung nach einer etwaigen Periodizität erfolgt im Periodizitäts-Block 47. Der Periodizitäts-Block 47 entscheidet, ob das fehleranzeigende Signal eine Periode von 4, 24, 72 und/oder ggf. einer weiteren, einer Anzahl von Werkzeugen innerhalb einer Baugruppe entsprechenden Periode aufweist.

Da die Anzahlen der Werkzeuge verschiedener Baugruppen vorteilhafterweise unterschiedlich sind, läßt sich anhand der ermittelten Periodizität eine Zuordnung eines Fehlers zu einer Baugruppe, nämlich zu den Schachtgruppen 15 des Magazins 13, zum Falt- und/oder Trockenrevolver 29 oder zur Taschenkette 17 vornehmen. Im Beispiel gemäß Fig. 2 wurde ein Fehler dem Trockenrevolver 29 zugeordnet.

In einem Berechnungsblock 48 wird anschließend die Berechnung des fehlerhaften Werkzeugs durchgeführt. Hierbei wird eine Position 50 des Drehgebers 43 sowie ein zuvor bestimmter Versatz 51 zwischen einer Bezugsposition 49 des Drehgebers 43 und der Überwachungskamera 41 abgefragt. Im Beispiel gemäß Fig. 2 beträgt dieser Versatz 14 Takte. Das fehlerhafte Werkzeug - Aufnahmeorgan 40 - kann nunmehr aus einer Differenz der vom Positionsgeber 43 ermittelten Position 50 und dem Versatz 51 ermittelt werden. Im Beispiel gemäß Fig. 2 folgt hieraus, daß das momentan von der Kamera 41 überwachte Produkt mit dem Aufnahmeorgan 40 mit der Identifizierungsnummer 11 bearbeitet worden ist. Der Berechnungsblock 48 gibt somit über das für das aktuelle untersuchte Produkt maßgebliche Werkzeug innerhalb einer Baugruppe Auskunft.

Im Berechnungsblock 48 ist die durch den Drehgeber 43 ermittelte Position 50 im linken Bereich dargestellt. Hiervon abgezogen wird der Versatz 51 zwischen Überwachungskamera 41 und Bezugsposition 49. Es ergibt sich die Werkzeugposition 52 des für die momentan untersuchte Packung verantwortlichen Werkzeugs.

Für jedes Werkzeug wird eine Fehlerkurve 53 erstellt. In Fig. 2 sind die Fehlerkurven 53 für die ersten vier Werkzeuge des Trockenrevolvers 29 dargestellt. Jede Fehlerkurve 53 repräsentiert zu jedem Zeitpunkt einen Mittelwert bzw. die Summe von Fehlern in den letzten M Takten. Die Anzahl M der vergangenen Takte ist abhängig von der Maschine 10 und der untersuchten Baugruppe. Vorzugsweise ist die Anzahl M jedoch ein Vielfaches der Anzahl von Werkzeugen innerhalb einer Baugruppe.

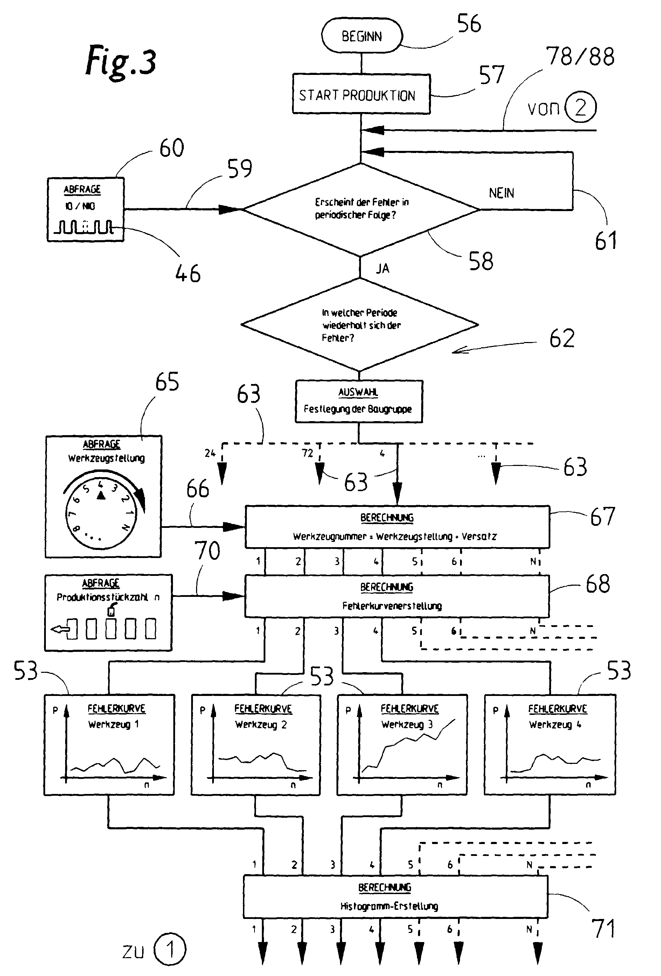

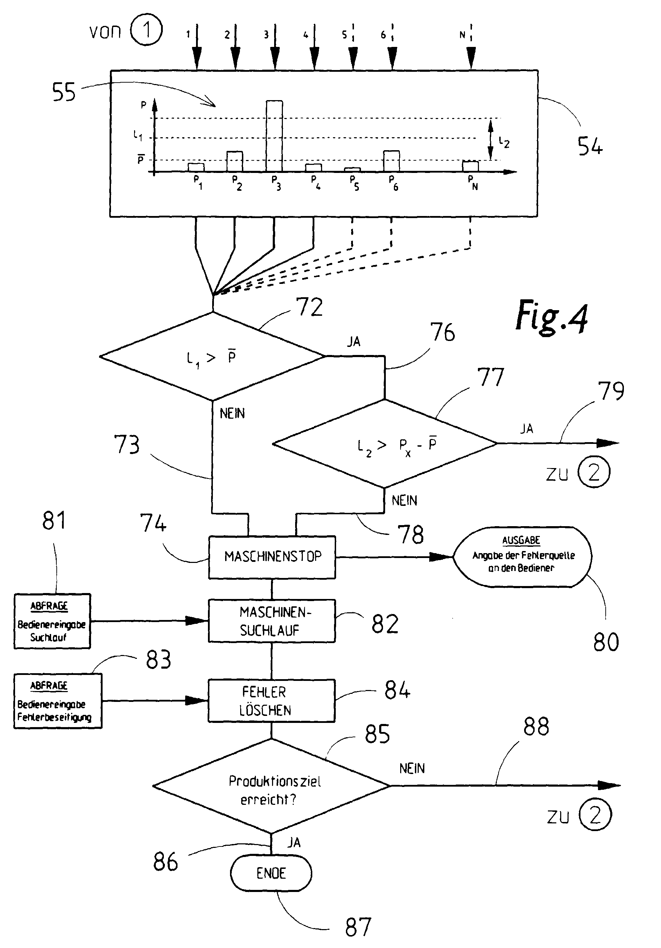

Im Histogramm-Block 54 wird ein Histogramm 55 ermittelt, bei dem für jedes Werkzeug innerhalb einer Baugruppe die momentane Fehlerhäufigkeit innerhalb der letzten M Takte angegeben wird. Diese Fehlerhäufigkeit wird als relative oder absolute Fehlerhäufigkeit angegeben. Das Histogramm 55 dient dann der näheren Untersuchung der einzelnen Baugruppen und der Anzeige von fehlerhaften Baugruppen, wie anhand des in den Fig. 3 und 4 dargestellten Flußdiagramms näher erläutert ist.

Fig. 3 zeigt einen ersten Teil dieses Flußdiagramms. Das Diagnoseverfahren beginnt mit dem Beginn-Block 56. Er startet die Produktion mit dem Start-Produktion-Block 57. Ein Verzweigungs-Block 58 fragt das fehleranzeigende Signal 46 ab, das anzeigt, ob eine Packung in Ordnung (IO) oder nicht in Ordnung (NIO) ist. Der Verzweigungs-Block 58 erhält hierzu eine Eingangsinformation 59 von einem Abfrage-Block 60, der die Auswertung des fehleranzeigenden Signals 46 nach ordnungsgemäßer oder nicht ordnungsgemäßer Packung durchführt.

Der Verzweigungs-Block 58 ermittelt ferner, ob ein Fehler in periodischer Folge auftritt. Hierzu können verschiedene Verfahren verwendet werden. Insbesondere kommt eine Fourier-Analyse des fehleranzeigenden Signals 46 in Betracht, die Auskunft über bevorzugte Frequenzen von auftretenden Fehlern gibt. Es ist jedoch auch eine Autokorrelation des fehleranzeigenden Signals 46 möglich. Grundsätzlich sind alle Verfahren geeignet, die Aufschluß über die Periodizität eines Signals geben.

Erscheint ein Fehler im fehleranzeigenden Signal 46 nicht in periodischer Folge, springt der Verfahrensablauf über den Zweig 61 zurück zum Eingang des Verzweigungs-Blocks 58. Falls jedoch der Fehler in periodischer Folge erfolgt, leitet der Verzweigungs-Block 58 den Verfahrensablauf zu einem Auswahlblock 62, der ermittelt mit welcher Periode sich der Fehler wiederholt und eine dieser Periode entsprechende Baugruppe auswählt bzw. festlegt. Hierzu sind Verzweigungen 63 vorgesehen, die das Verfahren jeweils mit unterschiedlichen Parametern fortführen. Im Beispiel gemäß Fig. 3 ist eine Baugruppe mit der Periode 4 ausgewählt.

Ein Positionsgeber 64 der ausgewählten Baugruppe fragt in einem Werkzeugstellungs-Block 55 die Werkzeugstellung der Werkzeuge der Baugruppe ab. Sie wird als Eingangsinformation 66 einem Berechnungs-Block 67 zugeführt. Der Berechnungs-Block 67 berechnet anschließend die der Identifikation eines Werkzeugs dienende Werkzeugnummer aus der Summe von Werkzeugstellung und dem Versatz, der dem Abstand zwischen Überwachungskamera und Bezugsposition des Positionsgebers 64 entspricht.

In einem weiteren Berechnungs-Block 68 werden Fehlerkurven für die einzelnen Werkzeuge erstellt. Hierbei wird als Eingangsinformation 69 für den Werkzeug-Block 68 auch die Produktionsstückzahl n im Abfrage-Block 70 abgefragt. Es ergibt sich eine der Werkzeuganzahl N entsprechende Anzahl von Fehlerkurven 53, wie sie im Zusammenhang mit Fig. 2 bereits erläutert wurde, d.h. jede Fehlerkurve 53 gibt für eine bestimmte Produktionsstückzahl n eine Fehlerhäufigkeit über die vergangenen M Takte an. Ein Berechnungs-Block 71 erstellt anhand der Fehlerkurven 53 ein Histogramm 55 und zwar im Histogramm-Block 54, der in Fig. 4 dargestellt ist. Mit der Ziffer 1 im Kreis ist die Schnittstelle zwischen den zusammengehörenden Fig. 3 und 4 veranschaulicht. Im Histogramm 55 in Fig. 4 sind mit $P_1$, $P_2$, $P_3$, $P_4$, $P_5$, $P_6$, ..., $P_N$ die (relativen) Fehlerhäufigkeiten in den N-Werkzeugen angegeben. Die relative Fehlerhäufigkeit tendiert für große Produktionsstückzahlen gegen die Fehlerwahrscheinlichkeit des jeweiligen Werkzeugs.

Ferner ist im Histogramm 55 die mittlere Fehlerhäufigkeit $\bar{P}$ aller Werkzeuge der ausgewählten Baugruppe angegeben, die ebenfalls für Produktionsstückzahlen gegen die mittlere Fehlerwahrscheinlichkeit aller Werkzeuge einer Baugruppe tendiert. Ferner ist ein Grenzwert $L_1$ für die maximal in einer Baugruppe zulässige Fehlerhäufigkeit bzw. Fehlerwahrscheinlichkeit dargestellt. Dieser Grenzwert ist baugruppenspezifisch, d.h. für jede Baugruppe unterschiedlich. Ferner ist ein maximal zulässiger Differenzwert $L_2$ dargestellt, der - zur mittleren Fehlerhäufigkeit bzw. Fehlerwahrscheinlichkeit $\bar{P}$ hinzuaddiert - einen oberen Grenzwert für die Fehlerhäufigkeit bzw. -wahrscheinlichkeit eines Werkzeugs angibt.Die mittlere Fehlerhäufigkeit $\bar{P}$ aller Werkzeuge einer Baugruppe $\bar{P}$ ändert sich laufend, da jeweils ein Mittelwert über diese Werkzeuge über M vergangener Takte berechnet wird.

In einem weiteren Verzweigungs-Block 72 erfolgt eine Abfrage dahingehend, ob die maximal in einer Baugruppe zulässige Fehlerhäufigkeit $L_1$ größer ist als die mittlere Fehlerhäufigkeit $\bar{P}$ aller Werkzeuge der Baugruppe. Falls diese Frage mit "NEIN" zu beantworten ist, verzweigt sich der Ablauf über den Zweig 73 zu einem Maschinenstop-Block 74, der ein Maschinenstopsignal erzeugt.

Der Zweig 73 deutet auf einen Fehler einer der untersuchten Baugruppe vorhergehenden Baugruppe hin, da kein spezifisches Werkzeug der untersuchten Baugruppe eine signifikante Erhöhung der Fehlerhäufigkeit aufweist. Vielmehr sind bei Erreichen des Zweigs 73 mehrere oder alle Werkzeuge der untersuchten Baugruppe gleichermaßen von einer Erhöhung der Fehlerhäufigkeit $P_1$-$P_N$ betroffen. Hieraus kann man schließen, daß der Fehler nicht in der aktuell untersuchten Baugruppe, sondern in einer im Produktionsprozeß vorhergehenden Baugruppe verursacht ist.

Falls die Frage des Verzweigungsblocks 72 mit "JA" zu beantworten ist, wird der Verfahrensablauf über einen Zweig 76 zum weiteren Verzweigungsblock 77 geleitet. Im Verzweigungsblock 77 wird die Frage gestellt, ob der maximal zulässige Differenzwert $L_2$ größer ist als die Differenz der Fehlerhäufigkeit in einem Werkzeug $P_X$ und der mittleren Fehlerhäufigkeit aller Werkzeuge einer Baugruppe $\overline{P}$. Falls diese Frage mit "NEIN" zu beantworten ist, gelangt der Verfahrensablauf über den Zweig 78 ebenfalls zum Maschinenstop-Block 74, so daß ein Maschinenstopsignal erzeugt wird. Der Zweig 78 deutet auf einen Fehler in einem bestimmten Werkzeug X der untersuchten Baugruppe hin. Die Fehlerhäufigkeit des Werkzeugs X ist nämlich bei Erreichen des Zweiges 78 größer als die Summe von mittlerer Fehlerhäufigkeit $\overline{P}$ und dem maximal zulässigen Differenzwert $L_2$.

Falls die Frage im Verzweigungs-Block 77 mit "JA" zu beantworten ist, springt das Verfahren über den Zweig 79 zurück zum Verzweigungs-Block 58, der in Fig. 3 dargestellt ist.

Nachdem das Maschinenstopsignal im Maschinenstop-Block 74 erzeugt worden ist, erfolgt eine Ausgabe im Ausgabe-Block 80 mit der Angabe der Fehlerquelle, insbesondere von Werkzeugnummer und Baugruppe, an eine Bedienperson. Ein Abfrageblock 81 wartet auf eine Bedienereingabe in Reaktion auf die Ausgabe des Ausgabe-Blocks 80, um einen Suchlauf zu starten. Dieser Suchlauf wird vom Maschinen-Suchlauf-Block 82 durchgeführt. Hierbei wird die Maschine in eine derartige Position gebracht, daß das fehlerhafte Werkzeug sich in einer Wartungsposition befindet und somit frei zugänglich ist für Wartungs- bzw. Reparaturmaßnahmen.

Über einen weiteren Abfrage-Block 83 wird eine Bedienereingabe abgefragt, die eine erfolgte Fehlerbeseitigung anzeigt. Daraufhin wird im Fehler-Löschen-Block 84 eine durch das Maschinenstopsignal gesetztes Marke zurückgesetzt und somit der angezeigte Fehler wieder gelöscht. In einem sich an den Fehler-Löschen-Block 84 anschließenden Verzweigungs-Block 85 wird die Frage gestellt, ob das Produktionsziel erreicht ist. Falls diese Frage mit "JA" zu beantworten ist, ist das Verfahren beendet und wird über den Zweig 86 mit dem Ende-Block 87 in einen Endzustand überführt. Falls die Frage mit "NEIN" zu beantworten ist, gelangt der Verfahrensablauf über den Zweig 88 zurück zum Verzweigungsblock 58, der in Fig. 3 dargestellt ist, und wird dort fortgesetzt.

Die in Fig. 2 gezeigte Steuereinheit 27a dient insbesondere der Implementierung der in den Fig. 2-4 dargestellten und erläuterten Blöcken und Funktionen und stellt entsprechende Mittel zur Realisierung der Funktionen bereit, insbesondere einen Mikroprozessor und einen Speicher.

Die Erfindung läßt sich zwar vorteilhaft bei Zigarettenverpackungsmaschinen anwenden und ist daher im Ausführungsbeispiel im Zusammenhang mit einer Verpackungsmaschine beschrieben. Sie ist jedoch auch bei anderen Maschinen einsetzbar, die Produkte verschiedenster Art herstellen und ggf. dabei auch verpacken. Die der Erfindung zugrundeliegende Erkenntnis, daß bestimmte Fehler an Werkzeugen bzw. Baugruppen bestimmte Periodizitäten in den Fehlern der hergestellten Produkte verursachen, läßt sich nämlich auf im wesentlichen allen Maschinen zur Herstellung von Produkten anwenden. Dank der Erfindung ist es möglich, ohne eine Vielzahl von Sensoren an jedem einzelnen Werkzeug, sondern mit nur einem oder wenigen Fehlererkennungsmitteln, wie Überwachungskameras, eine einzelne fehlerhafte Baugruppe und/oder ein einzelnes Werkzeug innerhalb einer Baugruppe mit hoher Zuverlässigkeit zu diagnostizieren und zu lokalisieren.

**Bezugszeichenliste:**

| | |
|---|---|
| 10 | Maschine |
| 11 | Zigarettenpackung |
| 12 | Zigarette |
| 13 | Zigarettenmagazin |
| 14 | Zigarettengruppe |
| 15 | Schachtgruppe |
| 16 | Tasche |
| 17 | Taschenkette |
| 18 | unterer Fördertrum |
| 19 | Faltrevolver |
| 20 | oberer Fördertrum |
| 21 | Umlenkrolle |
| 22 | Zuführorgan |
| 23 | Faltaggregat |
| 24 | Zuführorgan |
| 25 | Faltaggregat |
| 26 | Drehgeber |
| 27 | Aufnahmeorgan |
| 27a | Steuereinheit |
| 28 | Übergaberevolver |
| 29 | Trockenrevolver |
| 30 | Aufnahmeorgan |
| 31 | Banderolenapparat |

32 Banderole
33 Umlenkrolle
34 Bandförderer
35 Sternrad
36 Abförderer
37 Ausschleusenaggregat
38 Ausschleusenrad
39 Greiforgan
40 Aufnahmeorgan
41 Überwachungskamera
42 Ausstoßer
43 Drehgeber
44 Rechtecksignal
45 Störsignal
46 fehleranzeigendes Signal
47 Periodizitäts-Block
48 Berechnungs-Block
49 Bezugsposition
50 Drehgeberposition
51 Versatz
52 Werkzeugposition
53 Fehlerkurve
54 Histogramm-Block
55 Histogramm
56 Beginn-Block
57 Start-Produktion-Block
58 Verzweigungs-Block
59 Eingangsinformation
60 Abfrage-Block
61 Zweig
62 Auswahl-Block
63 Verzweigung
64 Positionsgeber
65 Werkzeugstellungs-Block
66 Eingangsinformation
67 Berechnungs-Block
68 Berechnungs-Block
69 Eingangsinformation
70 Abfrage-Block
71 Berechnungs-Block
72 Verzweigungs-Block
73 Zweig
74 Maschinenstop-Block
75 Verzweigungs-Block
76 Zweig
77 Verzweigungs-Block
78 Zweig
79 Zweig
80 Ausgabe-Block
81 Abfrage-Block
82 Maschinen-Suchlauf-Block
83 Abfrage-Block
84 Fehler-Löschen-Block
85 Verzweigungs-Block
86 Zweig
87 Ende-Block
88 Zweig

$P_1, P_2, P_3,..., P_X,..., P_N$   Fehlerhäufigkeit eines Werkzeugs

$\overline{P}$: mittlere Fehlerhäufigkeit aller Werkzeuge

L1 max. zulässige Fehlerhäufigkeit

L2 max. zulässiger Differenzwert

N Anzahl von Werkzeugen einer Baugruppe

M Anzahl von Takten

n Produktionsstückzahl

**Patentansprüche**

1. Verfahren zur Diagnose von Maschinen (10) zur Herstellung von Produkten, wie Zigaretten (12) und/oder Zigarettenpackungen 11, insbesondere von Zigarettenverpackungsmaschinen, wobei die Produkte (11, 12) auf Fehler untersucht werden und ein ein fehlerhaftes Produkt anzeigendes Signal (46) erzeugt wird, **dadurch gekennzeichnet**, daß das fehleranzeigende Signal (46) auf eventuelle Periodizität, insbesondere eine oder mehrere Perioden, von fehlerhaften Produkten (11, 12) ausgewertet und eine eventuelle Periodizität ermittelt wird.

2. Verfahren nach Anspruch 1, **dadurch gekennzeichnet**, daß eine Baugruppe (13, 17, 19, 28, 29, 35, 38) anhand der Periodizität ausgewählt wird, wobei jeder Baugruppe (13, 17, 19, 28, 29, 35, 38) eine charakteristische Periodizität zugeordnet ist.

3. Verfahren nach Anspruch 1 oder 2, **dadurch gekennzeichnet**, daß eine Position (52) einer Baugruppe (13, 17, 19, 28, 29, 35, 38) und/oder eines Werkzeugs (15, 16, 27, 30, 39, 40) innerhalb einer Baugruppe (13, 17, 19, 28, 29, 35, 38), insbesondere der ausgewählten Baugruppe, abgefragt wird.

4. Verfahren nach Anspruch 3, **dadurch gekennzeichnet**, daß ein fehlerhaftes Werkzeug (15, 16, 27, 30, 39, 40) anhand der abgefragten Position (52) und eines Versatzes (51), der einen Abstand, insbesondere in Maschinentakten, zwischen dem aktuell untersuchten Produkt (11, 12) und der ausgewählten Baugruppe (13, 17, 19, 28, 29, 35, 38) angibt, ermittelt wird.

5. Verfahren nach einem der vorhergehenden Ansprüche, **dadurch gekennzeichnet**, daß für jeweils ein Werkzeug (15, 16, 27, 30, 39, 40) und/oder eine Baugruppe (13, 17, 19, 28, 29, 35, 38) die Fehlerhäufigkeit ($P_1, P_2, P_3,..., P_X,..., P_N$) ermittelt bzw. eine Fehlerkurve (53) erstellt wird, insbesondere eine die Anzahl von fehlerhaften Produkten (11, 12) während einer festgelegten Anzahl (M) von Takten anzeigende Fehlerkurve in Abhängigkeit der hergestellten Produkte(n).

6. Verfahren nach einem der vorhergehenden Ansprüche, **dadurch gekennzeichnet**, daß wenigstens ein Histogramm (55) erstellt wird, das Fehlerhäufigkeiten ($P_1$, $P_2$, $P_3$,..., $P_X$,..., $P_N$) oder geschätzte Fehlerwahrscheinlichkeiten der Werkzeuge (15, 16, 27, 30, 39, 40) einer Baugruppe (13, 17, 19, 28, 29, 35, 38) angibt.

7. Verfahren nach einem der vorhergehenden Ansprüche, **dadurch gekennzeichnet**, daß ein Maschinenstopsignal erzeugt wird, wenn eine innerhalb einer Baugruppe (13, 17, 19, 28, 29, 35, 38) maximal zulässige Fehlerhäufigkeit ($L_1$) bzw. geschätzte Fehlerwahrscheinlichkeit nicht größer ist als eine aktuelle mittlere Fehlerhäufigkeit ($\overline{P}$) bzw. Fehlerwahrscheinlichkeit der Werkzeuge dieser Baugruppe, und eine Anzeige erzeugt wird, die einer Bedienperson angibt, daß ein Maschinenfehler in einer im Produktionsprozeß vorhergehenden Baugruppe (13, 17, 19, 28, 29, 35, 38) liegt.

8. Verfahren nach einem der vorhergehenden Ansprüche, **dadurch gekennzeichnet**, daß ein Maschinenstopsignal erzeugt wird, wenn ein maximal zulässiger Differenzwert ($L_2$) nicht größer ist als eine Differenz der Fehlerhäufigkeit ($P_1$, $P_2$, $P_3$,..., $P_X$,..., $P_N$) bzw. geschätzten Fehlerwahrscheinlichkeit eines Werkzeugs (15, 16, 27, 30, 39, 40) und der mittleren Fehlerhäufigkeit ($\overline{P}$) bzw. -wahrscheinlichkeit der Werkzeuge (15, 16, 27, 30, 39, 40) der zu diesem Werkzeug gehörenden Baugruppe (13, 17, 19, 28, 29, 35, 38) und eine Anzeige (80) erzeugt wird, die der Bedienperson angibt, daß dieses Werkzeug dieser Baugruppe fehlerhaft ist, insbesondere wenn die maximal zulässige Fehlerhäufigkeit ($L_1$) bzw. -wahrscheinlichkeit größer ist als die mittlere Fehlerhäufigkeit ($\overline{P}$) bzw. -wahrscheinlichkeit der Werkzeuge dieser Baugruppe.

9. Verfahren nach einem der Ansprüche 1 bis 8, **dadurch gekennzeichnet**, daß die Maschinen (10) nach Erzeugen des Maschinenstopsignals, insbesondere durch Betätigen einer Eingabeeinrichtung (81), in einer derartigen Position angehalten wird, daß sich ein als fehlerhaft erkanntes Werkzeug (15, 16, 27, 30, 39, 40) bzw. eine derartige Baugruppe (13, 17, 19, 28, 29, 35, 38) in einer Wartungsposition befindet.

10. Vorrichtung zur Diagnose von Maschinen (10) zur Herstellung von Produkten, wie Zigaretten (12) und/oder Zigarettenpackungen (11), insbesondere von Zigarettenverpackungsmaschinen, mit Fehlererkennungsmitteln (41) zum Untersuchen, ob ein Produkt (11, 12) fehlerhaft ist, und zum Erzeugen eines ein fehlerhaftes Produkt (11, 12) anzeigenden Signals (46), **gekennzeichnet durch** eine Steuereinheit (27a), die derart ausgebildet ist, daß eine Periodizität des fehleranzeigenden Signals (46) ermittelbar und angebbar ist.

11. Vorrichtung nach Anspruch 10, **gekennzeichnet durch** eine Auswahleinrichtung (47, 62) zur Auswahl einer Baugruppe (13, 17, 19, 28, 29, 35, 38) anhand der ermittelten Periodizität, einen einer Baugruppe (13, 17, 19, 28, 29, 35, 38) zugeordneten Positionsgeber (43, 64), insbesondere Drehgeber, zur Positionsbestimmung eines Werkzeugs (15, 16, 27, 30, 39, 40) innerhalb der Baugruppe (13, 17, 19, 28, 29, 35, 38), Werkzeugidentifizierungsmittel (48, 67), mit denen ein fehlerhaftes Werkzeug (15, 16, 27, 30, 39, 40) anhand der bestimmten Position (52) und eines Versatzes (51), der einen Abstand, insbesondere in Maschinentakten, zwischen den Fehlererkennungsmitteln (41) und dem untersuchten Produkt (11, 12) angibt, identifizierbar ist, Mittel zum Erzeugen eines Maschinenstopsignals und Mittel zum Anzeigen einer fehlerhaften Baugruppe (13, 17, 19, 28, 29, 35, 38) und/oder eines fehlerhaften Werkzeugs (15, 16, 27, 30, 39, 40), und/oder eine Eingabeeinrichtung (81) zum Starten eines Maschinensuchlaufs, um die Maschine (10) in eine Position zu bringen, in der Wartungsmaßnahmen durchführbar sind.

12. Vorrichtung nach einem der Ansprüche 10 oder 11, **gekennzeichnet durch** Mittel zum Durchführen des Verfahrens nach einem der Ansprüche 1 bis 9.

Fig. 1

Fig.2

EP 1 089 149 A2

*Fig.3*

BEGINN — 56

START PRODUKTION — 57

78/88

von ②

60

ABFRAGE
IO / NIO
⊓⊔⊓⊔⊓⊔

59

46

Erscheint der Fehler in
periodischer Folge?

NEIN

58

61

JA

In welcher Periode
wiederholt sich der
Fehler?

62

65

63

ABFRAGE
Werkzeugstellung

AUSWAHL
Festlegung der Baugruppe

24          72          4          ...          63

63          63

66

BERECHNUNG
Werkzeugnummer = Werkzeugstellung + Versatz

67

1  2  3  4  5  6  N

70

ABFRAGE
Produktionsstückzahl n

BERECHNUNG
Fehlerkurvenerstellung

68

1  2  3  4  5  6  N

53          53          53

P | FEHLERKURVE
Werkzeug 1
n

P | FEHLERKURVE
Werkzeug 2
n

P | FEHLERKURVE
Werkzeug 3
n

P | FEHLERKURVE
Werkzeug 4
n

1  2  3  4  5  6  N

BERECHNUNG
Histogramm-Erstellung

71

1  2  3  4  5  6  N

zu ①

von ①

1 2 3 4 5 6 N

55

54

$$P$$

$l_1$

$\bar{P}$

$l_2$

$P_1$ $P_2$ $P_3$ $P_4$ $P_5$ $P_6$ $P_N$

*Fig.4*

72

$l_1 > \bar{P}$

JA

76

77

79

$l_2 > P_x - \bar{P}$

JA

zu ②

NEIN

73

NEIN

81

74

78

**MASCHINENSTOP**

AUSGABE
Angabe der Fehlerquelle
an den Bediener

ABFRAGE
Bedienereingabe
Suchlauf

MASCHINEN-
SUCHLAUF

82

80

83

ABFRAGE
Bedienereingabe
Fehlerbeseitigung

FEHLER
LÖSCHEN

84

85

88

Produktionsziel
erreicht?

NEIN

zu ②

86

JA

ENDE

87